# EUROPEAN PATENT APPLICATION

(11) **EP 1 631 015 A1**
(43) Date of publication of application: **01.03.2006**
(21) Application number: 04292071.0
(22) Date of filing: 23.08.2004
(51) Int. Cl.: H04L 12/56

(54) **Network-node for exchanging data information via a path or a detour path**

(71) Applicant: ALCATEL, 75008 Paris (FR)
(72) Inventor: Papadimitriou, Dimitri, 1190 Brussels (BE); Rousseau, Bart, 2660 Antwerp (BE)
(74) Representative: Narmon, Gisèle Marie Thérèse

(57) **Abstract**

Network-nodes (10) comprising data exchangers (30) for exchanging data information via a path with other network-nodes (12) forming part of the path and for exchanging data information via a detour path in response to detections of failures in the path, are provided with bandwidth exchangers (31) for, in response to detections/notifications of failures in the path, exchanging bandwidth information with further network-nodes (13) forming part of the detour path. This is a combination of an advantageous aspect of a protection scheme (detour path set-up prior to failure detection) and an advantageous aspect of a restoration scheme (bandwidth allocation after failure detection). A network comprising this network-node (10) is relatively efficient in terms of bandwidth allocation at a relatively short recovery time. The data exchanger (30) exchanges the data information in accordance with a packet/frame/cell-switching procedure. Network-units (20-28) may be located between the network-nodes (10-15) and comprise data exchangers (40) for exchanging the data information in accordance with a circuit-switching procedure.

## Description

The invention relates to a network-node comprising a data exchanger for exchanging data information via a path with at least one other network-node forming part of the path and for, in response to a detection/notification of a failure in the path, exchanging data information via a detour path.

Examples of such a network-node are switches, routers, bridges, forwarders, multiplexers and servers.

A prior art network-node is known from US 2003/0229807, which discloses the combining of link protection schemes and path protection schemes into segment protection schemes, for networks comprising network-nodes. According to the protection schemes, a detour path set-up and a spare capacity allocation is done prior to a detection/notification of a failure in a path, where according to the restoration schemes, this is done after the failure in the path has been detected or notified. Protection schemes are advantageous in that they have a shorter recovery time, but are disadvantageous in that they are less bandwidth efficient, compared to restoration schemes. Restoration schemes are advantageous in that they are bandwidth efficient, but are disadvantageous in that they show a longer recovery time and a larger amount of information loss, compared to protection schemes.

The segment protection scheme, when combining a link protection scheme and a path protection scheme, still requires bandwidth in the network to be reserved for the detour path, which bandwidth is not used until the detour path is activated.

The known network-node is disadvantageous, inter alia, owing to the fact that a network comprising this network-node is still relatively inefficient in terms of bandwidth allocation.

It is an object of the invention, inter alia, to provide a network-node as defined in the preamble which allows a network comprising this network-node to be relatively efficient in terms of bandwidth allocation at a relatively short recovery time.

The network-node according to the invention is characterized in that the network-node further comprises a bandwidth exchanger for, in response to the detection/notification of the failure in the path, exchanging bandwidth information with at least one further network-node forming part of the detour path.

By introducing the bandwidth exchanger for, after the failure has been detected or notified, exchanging bandwidth information with the further network-node forming part of the detour path, the invention combines an advantageous aspect of a protection scheme (detour path set-up prior to failure detection/notification) and an advantageous aspect of a restoration scheme (bandwidth allocation after failure detection/notification). Until now, both schemes were regarded to be completely isolated from each other. As a result, a network comprising this network-node is relatively efficient in terms of bandwidth allocation at a relatively short recovery time.

For exchanging the bandwidth information, for example a set-up message used during a set-up phase for defining the detour path can be used again. According to a prior art protection scheme, such a set-up message comprises detour path information and pre-provisioned-bandwidth information. According to the invention, the same set-up message is exchanged after the set-up phase and after the failure in the path has been detected or notified. Only this time, the set-up message comprises non-pre-provisioned-bandwidth information defining the bandwidth which is momentarily required for the detour path. The detour path information in this set-up message may be similar to the detour path information exchanged during the set-up phase, or may be a shorter (coded) version thereof, or may be left out. Other possible messages are not to be excluded.

The term exchanger comprises for example a transmitter or a receiver or a transmitter/receiver. The term exchanging comprises for example transmitting or receiving or transmitting/receiving.

An embodiment of the network-node according to the invention is characterized in that the data exchanger is arranged to exchange the data information in accordance with a data-unit-switching procedure.

Such a data-unit-switching procedure for example comprises packet switching, frame switching or cell switching and may also be defined as non-circuit switching.

An embodiment of the network-node according to the invention is characterized in that the network-node further comprises a controller for, in a provisioning phase, controlling a detour path exchanger for exchanging detour path information defining the detour path and for, in response to the detection/notification of the failure, starting a detour path bandwidth activation phase for controlling the bandwidth exchanger for exchanging the bandwidth information and for controlling the data exchanger for activating the detour path.

The provisioning phase may correspond with the set-up phase discussed above. During this provisioning phase, for example the set-up message discussed above is used, now for example only comprising the detour path information and not comprising any pre-provisioned-bandwidth information (path protection with bandwidth activation). During the detour path bandwidth activation phase, at least the further network-node receives the required information to activate the bandwidth of the detour path through for example the set-up message discussed above, now for example comprising the non-pre-provisioned-bandwidth information defining the bandwidth which is momentarily required for the detour path. Again, the detour path information in this set-up message may be similar to the detour path information exchanged during the set-up phase, or may be a shorter (coded) version thereof, or may be left out. Other possible messages are not to be excluded.

An embodiment of the network-node according to the invention is characterized in that the detection/notification of the failure in the path comprises either a detection of the failure itself or a notification of the failure.

To be able to detect the failure in the path, the network-node comprises a failure detector for detecting the failure itself, for example by detecting that expected data or expected information has not arrived within a time interval, or comprises a message/report detector for detecting that a failure message/report has arrived.

The invention also relates to a system comprising the network-node according to the invention.

The system according to the invention is characterized in that the system further comprises the other network-node and the further network-node.

An embodiment of the system according to the invention is characterized in that the network-nodes comprise data exchangers arranged to exchange the data information in accordance with a data-unit-switching procedure.

An embodiment of the system according to the invention is characterized in that the system further comprises network-units located between the network-nodes, which network-units comprise data exchangers arranged to exchange the data information in accordance with a circuit-switching procedure.

Such a system is also known as a mixed network and comprises network-nodes for exchanging data in accordance with the non-circuit-switching procedure and comprises network-units located between these network-nodes for exchanging data in accordance with the circuit-switching procedure.

An embodiment of the system according to the invention is characterized in that the failure occurs either in a network-node or in a network-unit or between two network-elements, with a network-element comprising one of a network-node and a network-unit.

In case of the failure not occurring in a network-node, usually the first network-node at one side of this failure will become a point of local repair and the first network-node at the other side of this failure will become a merging point. In case of the failure occurring in a network-node, usually the first network-node coupled to one side of this failing network-node (possibly via one or more network-units) will become a point of local repair and the first network-node coupled to the other side of this failing network-node (possibly via one or more network-units) will become a merging point.

An embodiment of the system according to the invention is characterized in that the network-nodes comprise label switched routers, with the network-units comprising optical cross connect units, synchronous digital hierarchy units, optical transport hierarchy units, lambda switching units and/or wavelength switching units.

The label switched routers for example comprise internet protocol multi protocol label switched routers.

The invention yet also relates to a method for detour path bandwidth activation and comprising the steps of exchanging data information via a path between a network-node and at least one other network-node forming part of the path and of, in response to a detection/notification of a failure in the path, exchanging data information via a detour path.

The method according to the invention is characterized in that the method further comprises the step of, in response to the detection/notification of the failure in the path, exchanging bandwidth information between the network-node and a further network-node forming part of the detour path.

Embodiments of the method according to the invention correspond with the embodiments of the network-node according to the invention and/or the system according to the invention.

The invention is based upon an insight, inter alia, that detour path information is to be exchanged before a failure has occurred, to keep the recovery time short, and that the bandwidth information is to be exchanged after the failure has occurred, to be efficient in terms of bandwidth allocation, and is based upon a basic idea, inter alia, that both exchanges can be done separately from each other.

The invention solves the problem, inter alia, to provide a network-node which allows a network comprising this network-node to be relatively efficient in terms of bandwidth allocation at a relatively short recovery time, and is advantageous, inter alia, in that an advantageous aspect of a protection scheme (detour path set-up prior to failure detection/notification) and an advantageous aspect of a restoration scheme (bandwidth allocation after failure detection/notification) are combined. Until now, both schemes were regarded to be completely isolated from each other.

These and other aspects of the invention will be apparent from and elucidated with reference to the embodiments(s) described hereinafter.
Fig. 1 shows in block diagram form a system according to the invention comprising a network-node according to the invention, with a failure occurring inside a network-node;
Fig. 2 shows in block diagram form a system according to the invention comprising a network-node according to the invention, with a failure occurring inside a network-unit;
Fig. 3 shows in block diagram form a system according to the invention comprising a network-node according to the invention, with a failure occurring between a network-node and a network-unit;
Fig. 4 shows in block diagram form a system according to the invention comprising a network-node according to the invention, with a failure occurring between two network-nodes without a network-unit being in between;
Fig. 5 shows in block diagram form a network-node according to the invention; and
Fig. 6 shows in block diagram form a network-unit of a system according to the invention.

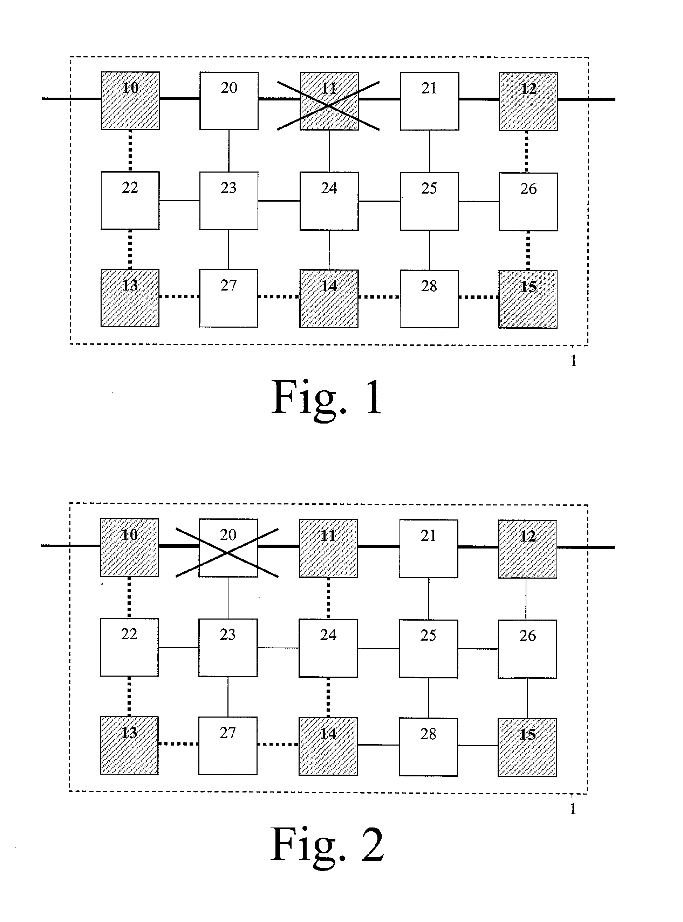

The system 1 according to the invention as shown in Fig. 1 comprises a network-node 10 coupled to a network-node 11 via a network-unit 20 and coupled to a network-node 13 via a network-unit 22. Network-node 11 is further coupled to a network-node 12 via a network-unit 21 and to a network-node 14 via a network-unit 24, which network-node 14 is further coupled to the network-node 13 via a network-unit 27 and to a network-node 15 via a network-unit 28. Network-node 15 is further coupled to the network-node 12 via a network-unit 26. A network-unit 23 is coupled to the network-unit 20, 22, 24 and 27. A network-unit 25 is coupled to the network-unit 21, 24, 26 and 28.

A path indicated by the bold non-dotted line comprises the network-elements 10, 20, 11, 21, 12. In case of a failure occurring inside the network-node 11, a detour path is activated. This detour path indicated by the bold dotted line comprises the network-elements 10, 22, 13, 27, 14, 28, 15, 26 and 12.

The system 1 according to the invention as shown in Fig. 2 corresponds with the system 1 as shown in Fig. 1, apart from the fact that a failure has occurred inside the network-unit 20. The detour path indicated by the bold dotted line then comprises the network-elements 10, 22, 13, 27, 14, 24 and 11.

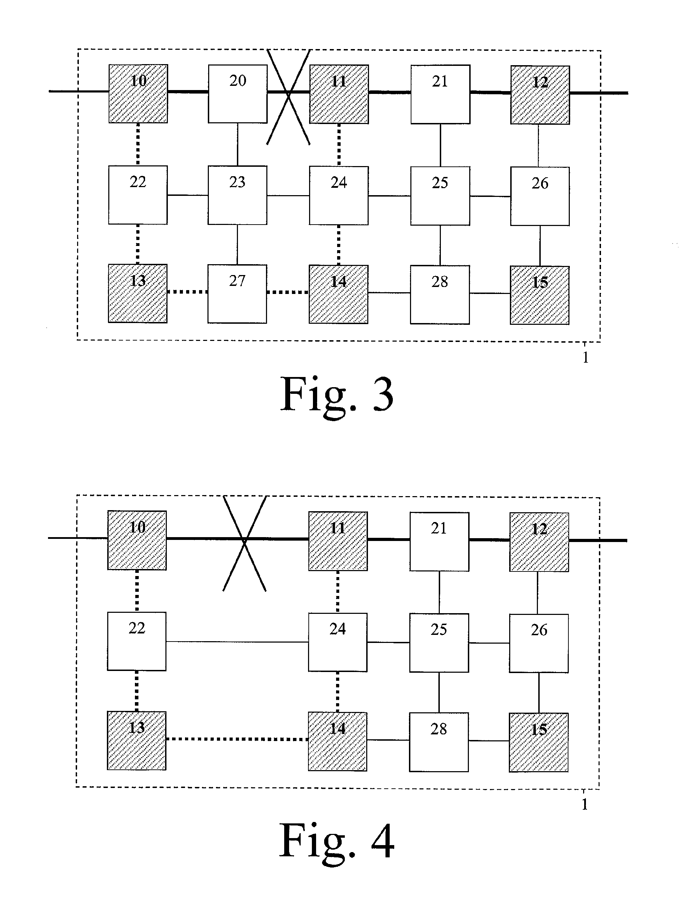

The system 1 according to the invention as shown in Fig. 3 corresponds with the system 1 as shown in Fig. 2, apart from the fact that a failure has occurred (in a link) between the network-node 11 and the network-unit 20. The detour path indicated by the bold dotted line then comprises the network-elements 10, 22, 13, 27, 14, 24 and 11.

The system 1 according to the invention as shown in Fig. 4 corresponds with the system 1 as shown in Fig. 3, apart from the fact that the network-units 20, 23 and 27 are left out. As a result, the network-nodes 10 and 11 are coupled to each other without a network-unit 20 being in between, and the network-units 22 and 24 are coupled to each other without a network-unit 23 being in between, and the network-nodes 13 and 14 are coupled to each other without a network-unit 27 being in between. A failure has occurred (in a link) between the network-nodes 10 and 11. The detour path indicated by the bold dotted line then comprises the network-elements 10, 22, 13, 14, 24 and 11.

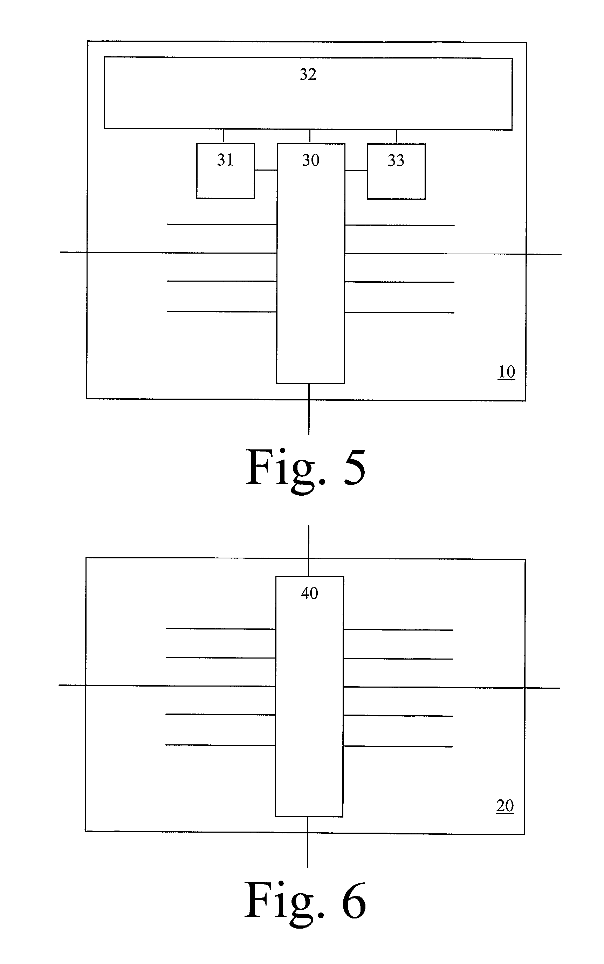

The network-node 10 according to the invention shown in Fig. 5 comprises a data exchanger 30 coupled to a bandwidth exchanger 31 and to a detour path exchanger 33. Each exchanger 30, 31 and 33 is coupled to a controller 32. The network-unit 20 shown in Fig. 6 comprises a data exchanger 40 controlled by a controller not shown.

Generally, the data exchanger 30 exchanges data information via the path with at least one other network-node 11, 12 forming part of the path. In response to a detection/notification of a failure in the path, the data information is exchanged via the detour path.

Thereto, for example during a set-up phase, the detour path exchanger 33 exchanges detour path information with other network-nodes in a way common in the art. This detour path information defines the detour path and for example depends on the detection/notification of the error in the path: an error inside the network-node 11 results in the detour path shown in Fig. 1, and an error in the network-unit 20 results in the detour path shown in Fig. 2 etc. The prior art set-up message comprises detour path information and pre-provisioned-bandwidth information. This pre-provisioned-bandwidth information defines the bandwidth to be reserved in the further network-node 13 for this detour path. Such a reservation of bandwidth is however inefficient. As long as the detour path is not used, the reserved bandwidth is not used.

According to the invention, the bandwidth for the detour path is not reserved or is reserved to a smaller extent. The bandwidth exchanger 31 exchanges, after the failure has been detected or notified, bandwidth information with the further network-node 13 forming part of the detour path. For exchanging this bandwidth information, for example the set-up message used during the set-up phase for defining the detour path, can be used again. This time, the set-up message comprises non-pre-provisioned-bandwidth information defining the bandwidth which is momentarily required for the detour path. Other possible messages are not to be excluded.

The data exchanger 30 is preferably arranged to exchange the data information in accordance with a data-unit-switching procedure. Such a data-unit-switching procedure for example comprises packet switching, frame switching or cell switching and may also be defined as non-circuit switching.

The controller 32 controls, in a provisioning phase, the detour path exchanger 33 for exchanging detour path information defining the detour path. The provisioning phase may correspond with the set-up phase discussed above. During this provisioning phase, for example the set-up message discussed above is used, now for example only comprising the detour path information and for example not comprising any pre-provisioned-bandwidth information.

Then the data information is exchanged via the network-elements 10, 20, 11, 21 and 12. In response to the detection/notification of the failure, the controller 32 starts a detour path bandwidth activation phase for controlling the bandwidth exchanger 31 for exchanging the bandwidth information with the network-nodes 13, 14 and 15 (Fig. 1) or 13 and 14 (Fig. 2-4). Alternatively, the controller 32 might control the bandwidth exchanger 31 for exchanging the bandwidth information with the network-node 13, which network-node 13 in response communicates with the network-node 14 etc. During the detour path bandwidth activation phase, at least the further network-node 13 receives the non-pre-provisioned-bandwidth information through for example the set-up message discussed above, now for example only comprising the non-pre-provisioned-bandwidth information defining the bandwidth which is momentarily required for the detour path. Other possible messages are not to be excluded.

During this detour path bandwidth activation phase, the controller 32 further controls the data exchanger 30 for activating the detour path. This is for example done by replacing addresses in data arriving at the network-node 10 and destined for the network-node 11 by detour path addresses defining the network-node 13.

The detection/notification of the failure in the path comprises either a detection of the failure itself or a notification of the failure. To be able to detect the failure in the path, the network-node 10 either comprises a failure detector for detecting the failure itself, for example by detecting that expected data or expected information has not arrived within a time interval, or comprises a message/report detector for detecting that a failure message/report has arrived, which failure message/report has for example been generated by another network-node or network-unit. Such a detector may form part of the controller 32.

The network-units 20-28 located between the network-nodes 10-15 comprise data exchangers 40 preferably arranged to exchange the data information in accordance with a circuit-switching procedure. Usually, a path to be set up between two network-nodes comprising data exchangers 30 arranged to exchange the data information in accordance with a non-circuit switching procedure via one or more network-units comprising data exchangers 40 arranged to exchange the data information in accordance with a circuit switching procedure is set up as follows. Firstly, the circuit switched connection is set up. Secondly the non-circuit switched connection is set up. In other words, the non-circuit switched data information (packet switched or frame switched or cell switched) is exchanged via the circuit switched connection after this circuit switched connection has been set up.

Generally, in case of a failure not occurring inside a network-node 11 (Fig. 2-4), usually the first network-node 10 at one side of this failure will become a point of local repair and the first network-node 11 at the other side of this failure will become a merging point. In case of the failure occurring inside a network-node 11 (Fig. 1), usually the first network-node 10 coupled to one side of this failing network-node (possibly via one or more network-units 20) will become a so-called point of local repair and the first network-node 12 coupled to the other side of this failing network-node 1 1 (possibly via one or more network-units 21) will become a so-called merging point. However, it is not to be excluded that even network-units may become such points of local repair and merging points, as explained below for a broadest situation.

The network-nodes 10-15 comprise label switched routers, such as for example internet protocol multi protocol label switched routers. The network-units 20-28 comprise optical cross connect units, synchronous digital hierarchy units, optical transport hierarchy units, lambda switching units and/or wavelength switching units.

In a broadest situation, the network-node according to the invention comprises a data exchanger for exchanging data information via a path with at least one other network-node forming part of the path and for, in response to a detection/notification of a failure in the path, exchanging data information via a detour path, and is characterized in that the network-node further comprises a bandwidth exchanger for, in response to the detection/notification of the failure in the path, exchanging bandwidth information with at least one further network-node forming part of the detour path. In this broadest situation, the data exchanger is not restricted to whatever kind of switching procedure, and therefore, the network-node according to the invention may correspond with a network-node 10-15 or with a network-unit 20-28. In case of corresponding with a network-unit 20-28, this network-unit 20-28 may then have a construction similar to the network-node 10 shown in Fig. 5.

In a more restricted situation, the data exchanger is arranged to exchange the data information in accordance with a data-unit-switching procedure. In this more restricted situation, the network-node according to the invention corresponds with a network-node 10-15, owing to the fact that a network-node 10-15 is designed to exchange data in accordance with a data-unit-switching procedure. The network-node according to the invention then no longer corresponds with a network-unit 20-28, owing to the fact that a network-unit 20-28 is designed to exchange data in accordance with a circuit-switching procedure.

In a minimum situation, the system 1 comprises three or more network-nodes. In a more extended situation, the system 1 comprises three or more network-nodes and one or more network-units located between the network-nodes. The configuration with the exchangers 30, 31 and 33 is an arbitrary one. Alternatively, each one of the exchangers 30, 31 and 33 may be coupled directly and without any other exchanger being in between to for example input/output interfaces not shown. Further, these exchangers 30, 31 and 33 may form part of the controller 32, with a coupler not shown for coupling the input/output interfaces not shown to each other being controlled by the controller 32. The exchangers 30, 31 and 33 may be combined into a smaller number of exchangers having multiple functions. The controller 32 may be divided into sub-controllers, for example a sub-controller per exchanger. Such a sub-controller may form part of the corresponding exchanger, or vice versa.

A failure may correspond with a failure in (a link-interface of) a network-node, with a failure in (a link-interface of) a network-unit, or with a failure in a link between two network-elements, with each network-element comprising one of a network-node and a network-unit. However, other kinds of failures are not to be excluded.

The expression "for" in for example "for exchanging" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

## Claims

1. Network-node (10) comprising a data exchanger (30) for exchanging data information via a path with at least one other network-node (12) forming part of the path and for, in response to a detection/notification of a failure in the path, exchanging data information via a detour path, **characterized in that** the network-node (10) further comprises a bandwidth exchanger (31) for, in response to the detection/notification of the failure in the path, exchanging bandwidth information with at least one further network-node (13) forming part of the detour path.

2. Network-node (10) as defined in claim 1, **characterized in that** the data exchanger (30) is arranged to exchange the data information in accordance with a data-unit-switching procedure.

3. Network-node (10) as defined in claim 1 or 2, **characterized in that** the network-node (10) further comprises a controller (32) for, in a provisioning phase, controlling a detour path exchanger (33) for exchanging detour path information defining the detour path and for, in response to the detection/notification of the failure, starting a detour path bandwidth activation phase for controlling the bandwidth exchanger (31) for exchanging the bandwidth information and for controlling the data exchanger (30) for activating the detour path.

4. Network-node (10) as defined in claim 1, 2 or 3, **characterized in that** the detection/notification of the failure in the path comprises either a detection of the failure itself or a notification of the failure.

5. System (1) comprising the network-node (10) as defined in claim 1, **characterized in that** the system further comprises the other network-node (12) and the further network-node (13).

6. System (1) as defined in claim 5, **characterized in that** the network-nodes (10-15) comprise data exchangers (30) arranged to exchange the data information in accordance with a data-unit-switching procedure.

7. System (1) as defined in claim 6, **characterized in that** the system (1) further comprises network-units (20-28) located between the network-nodes (10-15), which network-units (20-28) comprise data exchangers (40) arranged to exchange the data information in accordance with a circuit-switching procedure.

8. System (1) as defined in claim 7, **characterized in that** the failure occurs either in a network-node (10-15) or in a network-unit (20-28) or between two network-elements, with a network-element comprising one of a network-node (10-15) and a network-unit (20-28).

9. System (1) as defined in claim 7 or 8, **characterized in that** the network-nodes (10-15) comprise label switched routers, with the network-units (20-28) comprising optical cross connect units, synchronous digital hierarchy units, optical transport hierarchy units, lambda switching units and/or wavelength switching units.

10. Method for detour path bandwidth activation and comprising the steps of exchanging data information via a path between a network-node (10) and at least one other network-node (12) forming part of the path and of, in response to a detection/notification of a failure in the path, exchanging data information via a detour path, **characterized in that** the method further comprises the step of, in response to the detection/notification of the failure in the path, exchanging bandwidth information between the network-node (10) and a further network-node (13) forming part of the detour path.
